# EUROPEAN PATENT APPLICATION

(11) **EP 2 249 245 A2**
(43) Date of publication of application: **10.11.2010**
(21) Application number: 10159307.7
(22) Date of filing: 08.04.2010
(51) Int. Cl.: G06F 3/12

(54) **Method of storing print data, and image forming apparatus and image forming system to perform the method**

(30) Priority: 08.05.2009 KR 20090040465
(71) Applicant: SAMSUNG ELECTRONICS CO., LTD., Suwon-si, Gyeonggi-do (KR)
(72) Inventor: Kil, Hyun-sub, Gyeonggi-do (KR); Lee, Kee-chang, Gyeonggi-do (KR)
(74) Representative: Hewett, Jonathan Michael Richard

(57) **Abstract**

A method of storing print data, the method including selecting storage of the print data, receiving user identification information corresponding to the print data, certifying the user identification information by using user identification information that is stored in the image forming apparatus in advance, determining whether at least one document box corresponding to the user identification information exists in the image forming apparatus, and storing the print data in the at least one document box.

## Description

The present general inventive concept relates to a method of storing print data, and an image forming apparatus and an image forming system to perform the method.

An image forming apparatus, which has at least one function of printing, photocopying, scanning, and faxing, uses various printing functions to perform a printing operation. A function called "Document Box" may be used to store print data regarding a printing task in an image forming apparatus and to use the stored print data. The principle of the "Document Box" function is that a user stores print data, which is generated during printing, faxing, scanning, and/or photocopying, in a desired box, and the print data stored in the box is printed, transmitted via e-mail, transmitted via a server such as an SMB or an FTP server, or transmitted via fax at a desired time point. Here, the box refers to a storing location in a storage unit within an image forming apparatus, and is similar to a document box used in a system. Accordingly, when an image forming apparatus performs a printing operation, print data, which is either generated by the image forming apparatus or input from a host apparatus, may be stored in the image forming apparatus.

The present general inventive concept provides a method of storing print data, and an image forming apparatus and an image forming system to perform the method.

Additional embodiments of the present general inventive concept will be set forth in part in the description which follows and, in part, will be obvious from the description, or may be learned by practice of the general inventive concept.

Example embodiments of the present general inventive concept can be achieved by providing a method of storing print data, the method including selecting at least one storage option to store the print data, receiving user identification information corresponding to the print data, certifying the user identification information by using user identification information that is pre-stored in the image forming apparatus, determining whether at least one document box corresponding to the user identification information exists in the image forming apparatus, and storing the print data in the at least one document box.

Example embodiments of the present general inventive concept can also be achieved by providing a computer readable recording medium having recorded thereon a computer program to execute a method of storing print data according to the example embodiments of the present general inventive concept.

Example embodiments of the present general inventive concept can also be achieved by providing an image forming apparatus including an interface unit to receive user identification information corresponding to print data, a user certifying unit to certify the user identification information by using pre-stored user identification information, a document box confirming unit to determine whether at least one document box corresponding to the user identification information exists, and a storage unit to store the print data in the at least one document box.

Example embodiments of the present general inventive concept can also be achieved by providing an image forming system to store print data, including a host apparatus to selectively store print data, to set user identification information, to generate mapping information to match the user identification information to at least one document box corresponding to the user identification information, and to transmit the user identification information, the mapping information, and the print data. The image forming apparatus can be used to certify the user identification information by using pre-stored user identification information, to determine whether at least one document box corresponding to the user identification information exists, and to store the print data in the at least one document box.

Example embodiments of the present general inventive concept can also be achieved by providing a host apparatus to generate print data of an image forming apparatus, including a printer driver to set a user identification (ID) corresponding to the print data, a mapping unit to map the set user ID to a predetermined storage area corresponding to the set user ID, and a storage unit to store the print data in the predetermined storage area when the set user ID matches a pre-stored user ID of the image forming apparatus.

The host apparatus may further include a user interface to selectively generate another storage area corresponding to the set user ID or to store the print data in a common storage area, when the set user ID does not match the pre-stored user ID.

The host apparatus may further include a data processing unit to selectively perform multiple printing, scanning, faxing, copying, e-mailing, or FTP operations using the stored print data.

Example embodiments of the present general inventive concept can also be achieved by providing a method of storing print data of an image forming apparatus, including setting a user identification (ID) corresponding to the print data; mapping the set user ID to a predetermined storage area corresponding to the set user ID, and storing the print data in the predetermined storage area when the set user ID matches a pre-stored user ID of the image forming apparatus.

The method may further include selectively generating another storage area corresponding to the set user ID or storing the print data in a common storage area, when the set user ID does not match the pre-stored user ID.

The method may further include selectively performing multiple printing, scanning, faxing, copying, e-mailing, or FTP operations using the stored print data.

Example embodiments of the present general inventive concept can also be achieved by providing a method of storing print data of an image forming apparatus, including generating a user interface including a user identification (ID) input area to set a user ID corresponding to the print data, and a storage option input area to set storage options corresponding to a predetermined storage area to store the print data, storing the print data in the predetermined storage area when the set user ID matches a pre-stored user ID of the image forming apparatus, and selectively performing multiple printing, scanning, faxing, copying, e-mailing, and FTP operations using the stored print data.

Example embodiments of the present general inventive concept can also be achieved by providing a printing system including a storage unit having a document box, and a controller to store print data in the document box of the storage unit according to user identification information and reference user identification information.

The above and/or other embodiments of the present general inventive concept will become apparent and more readily appreciated from the following description of the embodiments, taken in conjunction with the accompanying drawings of which:
FIG. 1 is a block diagram of an image forming system to store print data, according to an example embodiment of the present general inventive concept;
FIG. 2 is a block diagram of an image forming apparatus to store print data of a printing task, according to an example embodiment of the present general inventive concept;
FIG. 3 is a flowchart of a method of storing print data of a printing task, according to an example embodiment of the present general inventive concept;
FIG. 4 is a diagram illustrating a user interface to set printing options via a printer driver of a host apparatus, according to an example embodiment of the present general inventive concept;
FIG. 5 is a diagram illustrating a user interface to set user identification information via a printer driver of a host apparatus, according to an example embodiment of the present general inventive concept;
FIG. 6 is a diagram illustrating a user interface to set storage options via a printer driver of a host apparatus, according to an example embodiment of the present general inventive concept;
FIG. 7 is a diagram illustrating a user/document box mapping table according to an example embodiment of the present general inventive concept;
FIG. 8 is a diagram illustrating a user interface to generate a document box, according to an example embodiment of the present general inventive concept;
FIG. 9 is a diagram illustrating a user interface including a list of document boxes, according to an example embodiment of the present general inventive concept; and
FIG. 10 is a diagram illustrating storage information in a case where print data is stored in a document box "BOX A", according to an example embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

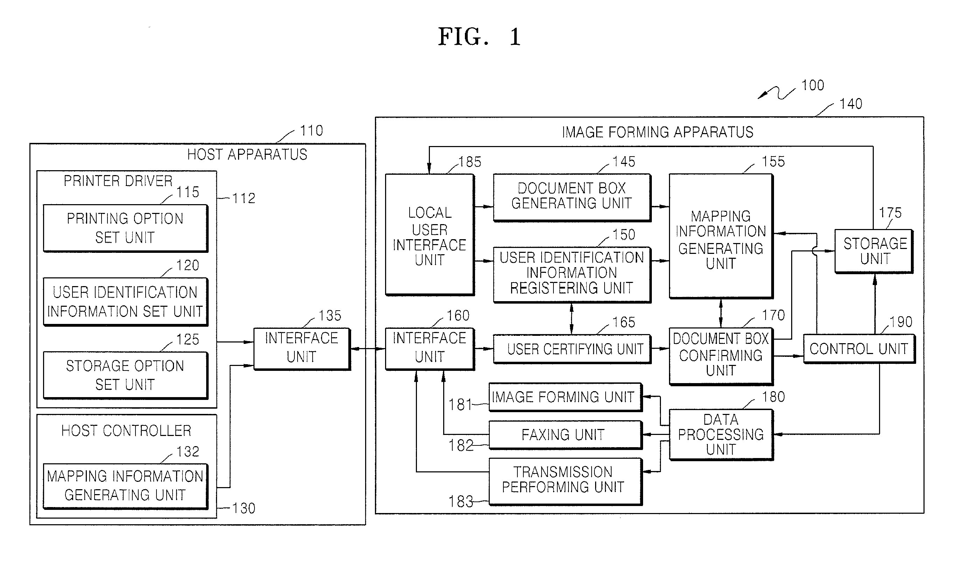

FIG. 1 is a block diagram of an image forming system 100 to store print data, according to an embodiment of the present general inventive concept. As illustrated in FIG. 1, the image forming system 100 according to an example embodiment includes a host apparatus 110 and an image forming apparatus 140.

The host apparatus 110 includes a printer driver 112, a host controller 130, and an interface unit 135. The printer driver 112 includes a printing option set unit 115, a user identification information set unit 120, and a storage option set unit 125. The host controller 130 includes a mapping information generating unit 132 to generate mapping information to match user identification information to at least one document box corresponding to the user identification information. The host apparatus 110 selects options to store print data, sets user identification information corresponding to a user, generates mapping information to map the least one document box to the user identification information, and transmits the user identification information, the mapping information, and the print data to the image forming apparatus 140 via the interface units 135, 160, respectively. It is noted that although FIG. 1 illustrates that the image forming system 100 includes one host apparatus 110 connected to one image forming apparatus 140, it is possible that the image forming apparatus may be connected to a plurality of host apparatuses, and that various wired or wireless connection methods may be used there between, for example local connection, network connection, and the like, without departing from the broader principles and spirit of the present general inventive concept. It is also possible that the host apparatus 110 and the image forming apparatus 140 can be formed as a single body or as separate bodies.

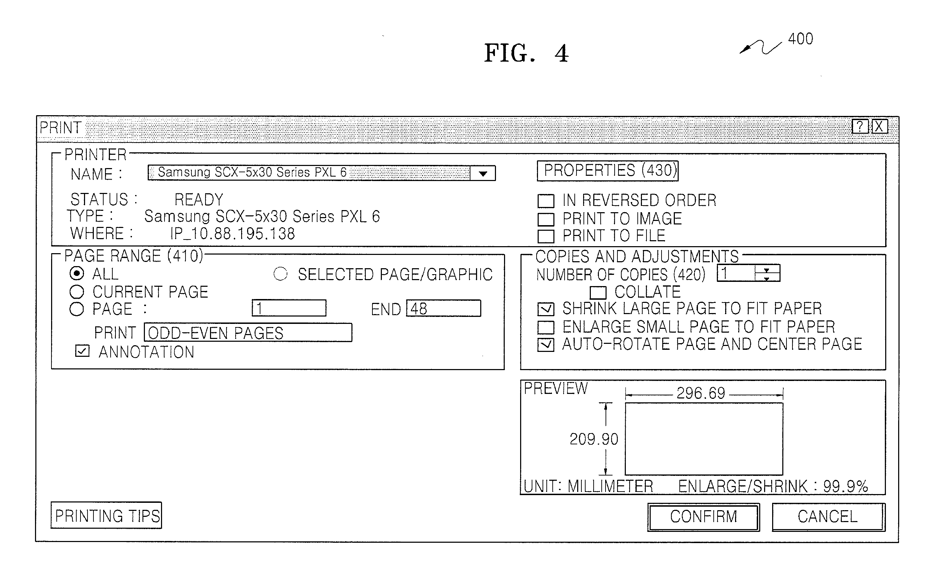

In order to set printing options, the printing option set unit 115 sets printing options according to options selected in one or more user interfaces, for example, as illustrated in FIGS. 4-6. Referring to FIGS. 1 and 4, a user interface 400 can be provided by the printer driver 112 of the host apparatus 110. As illustrated in FIG. 4, basic printing options such as a 'page range' option 410 to designate a range of pages to print and a 'copies' option 420 to designate the number of copies to print can be provided, and advanced printing options may be set in a user interface 400 via a button of properties 430.

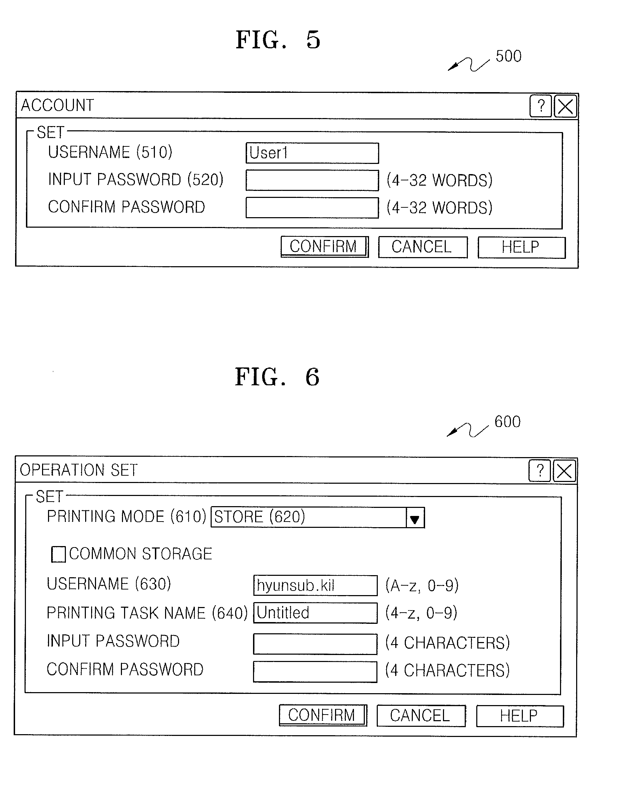

Referring to FIGS. 1 and 5, the user identification information set unit 120 can generate a user input signal through a user interface 500 to set user identification information to identify a user who desires to perform a printing operation using the image forming apparatus 140. According to an example embodiment of the present general inventive concept, a user may set user identification information by inputting a user ID 510 and a password 520 via a user interface 500 illustrated in FIG. 5. Although FIG. 5 illustrates that the user ID 210 and the password 520 are used as user identification information, the present general inventive concept is not limited thereto, and it is possible that any type of information may be used as long as the information is unique to a user.

Referring to FIGS. 1 and 6, the storage option set unit 125 can generate a user input signal through a user interface 600 to set options to store print data in the image forming apparatus 140. For example, if a user selects a 'store' option 620 for a printing mode option 610 in the user interface 600 of FIG. 6, print data may be stored after a printing operation with respect to the print data is processed by the image forming apparatus 140. In this case, a username 630 and a printing task name 640 may be set as information regarding the stored print data.

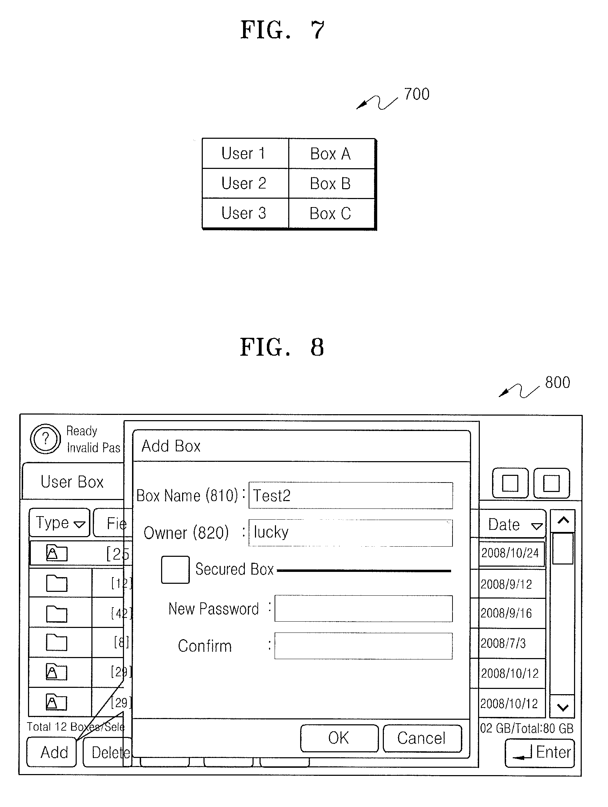

Referring to FIGS. 1 and 7, the host controller 130 has a document management function to manage storage locations of the print data in one or more document boxes, including a mapping information generating unit 132 to generate mapping information to match document boxes with the set user identification information. For example, the mapping information generating unit 132 may generate mapping information by matching user identification information with document boxes corresponding to pre-stored user identification information of the image forming apparatus 100. It is also possible that the host controller 130 may include a web application in addition to the mapping information generating unit 132 to assist the document management function.

FIG. 7 is a diagram illustrating a user/document box mapping table 700 according to an example embodiment of the present general inventive concept. Referring to FIG. 7, a user/document box mapping table 700 wherein each document box BOX A, BOX B, and BOX C of the image forming apparatus 140 is respectively matched to its corresponding user identification information USER 1, USER 2, AND USER 3 using a list of user identification information and a list of document boxes. In the exemplary user/document box mapping table 700 of FIG. 7, the USER 1 is matched to the document box "BOX A," the USER 2 is matched to the document box "BOX B," and the USER 3 is matched to the document box "BOX C." Therefore, in case of the USER 1, print data is stored in the document box "BOX A" corresponding to the USER 1. It is noted that although the user identification information in the user/document box mapping table 700 is a user ID, it is possible that any type of information may be used as the user identification information as long as the information is unique to a user, for example, the IP address of a host apparatus used by the user.

Referring back to FIG. 1, the interface unit 135 of the host apparatus 110 can be connected to the interface unit 160 of the image forming apparatus 140 via a wired or wireless connection to transmit the user identification information, mapping information, and print data from the host apparatus 110 to the image forming apparatus 140.

Referring to FIG. 1, the image forming apparatus 140 according to an example embodiment of the present general inventive concept includes a document box generating unit 145, a user identification information registering unit 150, a mapping information generating unit 155, an interface unit 160, a user certifying unit 165, a document box confirming unit 170, a storage unit 175, a data processing unit 180, an image forming unit 181, a faxing unit 182, a transmission performing unit 183, a local user interface unit 185, and a control unit 190. The user certifying unit 165 communicates with the user interface 160 and the user identification registration unit 150 of the image forming apparatus 140 to certify the user identification information by using pre-stored user identification information, and the image forming apparatus 140 determines whether there is at least one document box corresponding to the user identification information, and stores the print data in the at least one document box.

The document box generating unit 145 of the image forming apparatus 140 may store print data, and may generate at least one document box corresponding to user identification information. For example, the document box generating unit 145 can generate at least one document box corresponding to user identification information, using an input signal corresponding to values input via the local user interface unit 185.

FIG. 8 is a diagram illustrating a user interface 800 to generate a document box, according to an example embodiment of the present general inventive concept. As illustrated in FIG. 8, the user interface 800 is displayed on the local user interface unit 185, and a user may generate a document box by setting a Box Name option 810 and an Owner option 820.

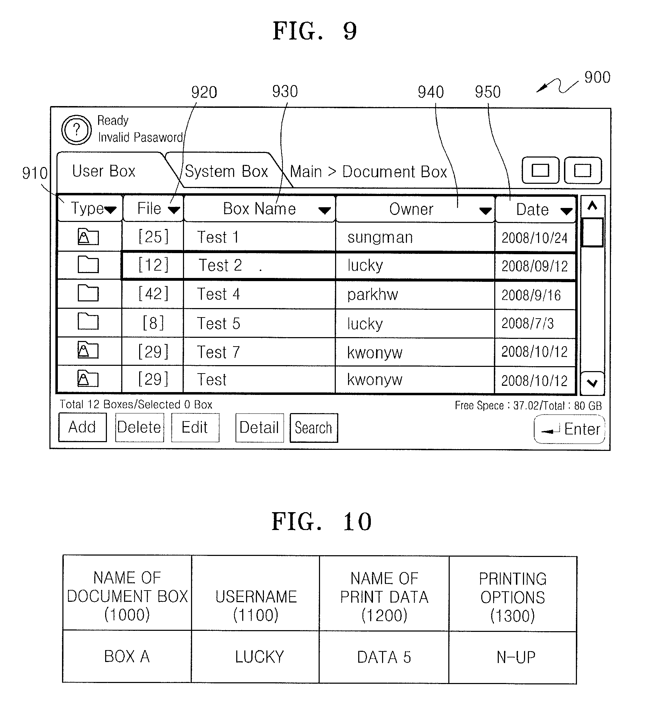

FIG. 9 is a diagram illustrating a user interface 900 including a list of document boxes, according to an example embodiment of the present general inventive concept. As illustrated in FIG. 9, the list of document boxes includes a Type option 910, a File option 920, an Owner option 940, a Box Name option 930, and a Date option 950, and thus detailed information regarding a document box may be obtained.

In FIG. 1, the user identification information registering unit 150 registers user identification information to identify a user authorized to use the image forming apparatus 140. Accordingly, since the user identification information is registered by the user identification information unit 150, only a user corresponding to the registered user identification information is authorized to use the image forming apparatus 140. In the example embodiments of the present general inventive concept, the user identification information is information unique to a user, and may be a user ID or an IP address of a host apparatus used by the user, but the present general inventive concept is not limited thereto, and any number of different types of user identification information may be used without departing from the principles and scope of the present general inventive concept.

Referring to FIGS. 1 and 7, the mapping information generating unit 155 may generate a user/document box mapping table 700 containing mapping information by respectively matching documents boxes generated by the document box generating unit 145 with user identification information registered by the user identification information registering unit 150. For example, the mapping information generating unit 155 can set at least one of a name of document box, user identification information, and document box properties of a document box.

FIG. 7 illustrates an exemplary user/document box mapping table generated according to an example embodiment of the present general inventive concept as the user/document box mapping table 700. Here, the user/document box mapping table 700 respectively matches each document box BOX A, BOX B, and BOX C corresponding to stored print data of the image forming apparatus 140 to a corresponding list of set user ID's USER 1, USER 2, and USER 3 of the image forming apparatus 140. However, as mentioned above, although FIG. 7 illustrates user identification information in the form of a user ID, it is possible that any type of information may be used as the user identification information as long as the information is unique to a user, for example, the IP address of a host apparatus used by the user.

Referring back to FIG. 1, the interface unit 160 of the image forming apparatus 140 is connected to the interface unit 135 of the host apparatus 110 via a wired or wireless connection to receive print data and user identification information corresponding to the print data from the host apparatus and to transmit a result of a process performed by the image forming apparatus 140 to the host apparatus.

The user certifying unit 165 communicates with the interface unit 160 and the user identification information registering unit 150 to certify user identification information received via the interface unit 160. The user certifying unit 165 certifies whether a user corresponding to the received user identification information is an authorized user by determining whether the received user identification information is registered to the user identification information registering unit 150. If the received user identification information has been registered to the user identification information registering unit 150, the user corresponding to the received user identification information is certified as an authorized user.

When a user corresponding to received user identification information is certified as an authorized user, the document box confirming unit 170 communicates with the user certifying unit 165 to determine whether at least one document box corresponding to the user identification information exists. According to an example embodiment of the present general inventive concept, at least one document box corresponding to the user identification information may exist in the image forming apparatus 140, because it is possible that a backup box of print data may be set and stored in the storage unit 175 in either a common document box or in a user box. Accordingly, the document box confirming unit 170 determines whether at least one document box corresponding to the user identification information exists in the image forming apparatus 140. For example, the document box confirming unit 170 may use mapping information in which user identification information is matched to at least one document box, as described above in connection with FIG. 7.

The storage unit 175 stores print data in a particular document box according to an instruction from the control unit 190. If the document box confirming unit 170 confirms that a user/document box mapping table exists in the image forming apparatus 140, the storage unit 175 stores print data in a document box obtained from the user/document box mapping table. In contrast, if no user/document box mapping table exists in the image forming apparatus 140, the storage unit 175 stores print data in a preset common document box that is set by the image forming apparatus 140. Here, a user may select whether to store the print data in a common document box of the image forming apparatus 140.

With continued reference to FIG. 1, the data processing unit 180 communicates with the control unit 190 and the image forming unit 181, faxing unit 182, and transmission performing unit 183 to process the print data stored in the storage unit 175. The data processing unit 180 may convert the print data into files corresponding to the various functions of the image forming apparatus 140, such as printing, faxing, scanning, photocopying, e-mailing, FTP, etc. Accordingly, the print data may be processed by the data processing unit 180 to perform these and other various functions of the image forming apparatus 140. However, the present general inventive concept is not limited to converting the print data into files corresponding to the various features, and it is possible that the print data need not be converted into corresponding files to carry out the various functions of the image forming apparatus with respect to the print data. Furthermore, it is possible that files converted from print data by the data processing unit 180 may be transmitted to the various units 181, 182, and 183 such that each unit performs a particular function.

For example, the image forming unit 181 communicates with the data processing unit 180 to print a file received from the data processing unit 180. Similarly, the faxing unit 182 communicates with the data processing unit 180 to transmit a file received from the data processing unit 180 to an external facsimile apparatus. The transmission performing unit 183 also communicates with the data processing unit 180 to transmit a file received from the data processing unit 180 to the interface unit 160, so that the file is transmitted to an external host apparatus or a server. As illustrated in FIG. 1, examples of the units to perform a particular function include the image forming unit 181, the faxing unit 182, and the transmission performing unit 183. However, those skilled in the art will appreciate that the present general inventive concept is not limited thereto, and it is possible that the image forming apparatus 140 may further include other units which perform additional functions other than the functions performed by the image forming unit 181, the faxing unit 182, and the transmission performing unit 183 of the image forming apparatus 140.

The local user interface unit 185 receives inputs of a user via the various displayed user interfaces (see FIGS. 8 and 9) of the image forming apparatus 140 and generates a user input signal to communicate with the storage unit 175, document box generating unit 145, and user identification information registering unit 150 according to the user input signal.

The control unit 190 controls all operations of the image forming apparatus 140 by controlling the components of the image forming apparatus 140. For example, , the control unit 190 of the example embodiment controls operations of the storage unit 175 and the data processing unit 180 based on a result of certification of user identification information received from the user certifying unit 165. If the received user identification information is not certified information, the control unit 190 drives the data processing unit 180 to print the print data. However, if the received user identification information is certified information, the control unit 190 drives the storage 175 to store the print data.

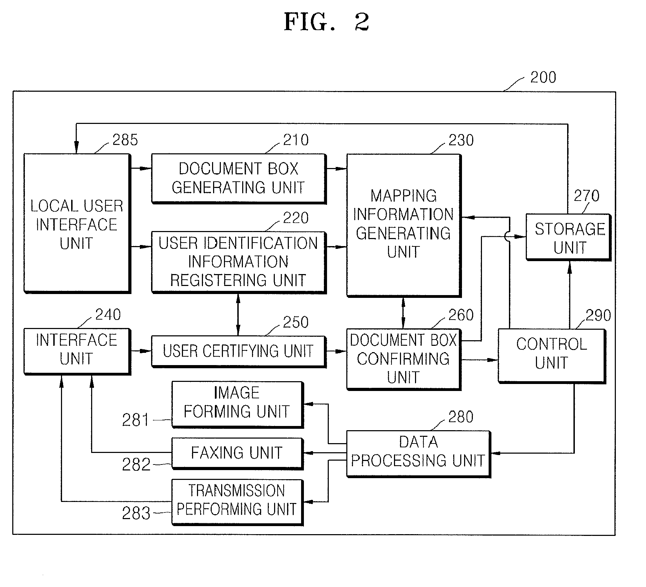

FIG. 2 is a block diagram of an image forming apparatus 200 to store print data of a printing task, according to an example embodiment of the present general inventive concept. As illustrated in FIG. 2, the exemplary image forming apparatus 200 includes a document box generating unit 210, a user identification information registering unit 220, a mapping information generating unit 230, an interface unit 240, a user certifying unit 250, a document box confirming unit 260, a storage unit 270, a data processing unit 280, a local user interface unit 285, and a control unit 290. It is noted that operations of the various components of the image forming apparatus 200 as illustrated in FIG. 2 are the same or similar to the operations of the components of the exemplary image forming apparatus 140 illustrated in FIG. 1.

Therefore, detailed descriptions of the components will be omitted for convenience of description.

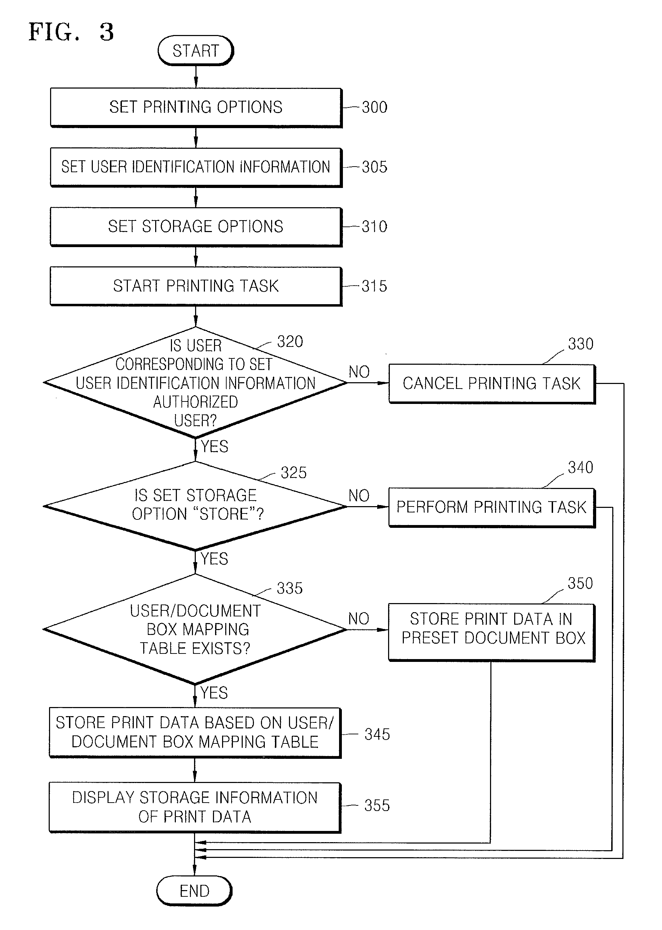

FIG. 3 is a flowchart of a method of storing print data of a printing task, according to an example embodiment of the present general inventive concept. As illustrated in FIG. 3, printing options are set via a printer driver of a host apparatus connected to an image forming apparatus in operation 300.

FIG. 4 is a diagram illustrating the user interface 400 to set printing options via a printer driver of a host apparatus, according to an example embodiment of the present general inventive concept. In the exemplary user interface 400 of FIG. 4, basic printing options such as the 'page range' option 410 and the 'copies' option 420 may be set as printing options to perform a printing task. Furthermore, advanced printing options such as an option for printing on both sides of a page, an option for N-up printing, etc., may be set via the button for the properties 430.

Referring to FIG. 3, user identification information is set in operation 305. Here, user identification information refers to information, which is unique to a user, to indicate a user performing a printing task. According to an example embodiment of the present general inventive concept, the user identification information may be set by inputting a user ID and a password. FIG. 5 is a diagram illustrating an exemplary user interface 500 to set user identification information via a printer driver of a host apparatus, according to an example embodiment of the present general inventive concept. In the exemplary user interface 500 of FIG. 5, the user identification information may be set by inputting a user ID and a password. However, although FIG. 5 illustrates that a user ID and a password are used as user identification information, the present general inventive concept is not limited thereto, and any type of information, for example, an IP address of a host apparatus used by a user, may be used as long as the information is unique to a user.

In operation 310, storage options are set. Here, it is possible to not only print the print data, but also to store the print data in an image forming apparatus, such that the print data may be selected to be printed or stored by setting storage options. For example, FIG. 6 is a diagram illustrating an exemplary user interface 600 to set storage options via a printer driver of a host apparatus, according to an example embodiment of the present general inventive concept. When store option 620 is set as the printing mode option 610, print data may be stored in an image forming apparatus. Furthermore, when store option 620 is set as the printing mode option 610, the username 630 and the printing task name 640 may be set as information regarding the stored print data.

In operation 315, a printing task begins. Here, when all settings of the printer driver of a host apparatus are completed, a printing task begins. When a printing task begins, a printing instruction is transmitted to the image forming apparatus, and the image forming apparatus operates according to the transmitted instruction.

In operation 320, it is determined whether a user corresponding to set user identification information is an authorized user. In this operation, user identification information corresponding to an authorized user may be registered to an image forming apparatus. Accordingly, it is possible to determine whether a user corresponding to set user identification information is an authorized user by certifying whether the set user identification information is registered to the image forming apparatus. If it is determined that the user is an authorized user, the method proceeds to operation 325. If not, the method proceeds to operation 330 to cancel the printing task.

In operation 325, it is determined whether the set storage option is set to "store" or not. Here, print data of a printing task may be stored in the image forming apparatus either before or after performing the printing task. However, the print data should be print data that may be stored in the image forming apparatus. It may be determined whether print data may be stored in the image forming apparatus by determining whether the storage option is set to "store." Accordingly, if it is determined that the storage option is set to "store," the method proceeds to operation 335. If not, the method proceeds to operation 340 to perform the printing task.

In operation 330, the printing task is cancelled. For example, if set user identification information is not certified, it is determined that a user corresponding to the user identification information is not a user authorized to use the image forming apparatus. Thus, the printing task requested by the user is cancelled.

In operation 335, it is determined whether a user/document box mapping table exists in the image forming apparatus. In this operation, it is assumed that at least one document box in which print data may be stored is generated in the image forming apparatus in advance. Furthermore, according to an example embodiment of the present general inventive concept, mapping information corresponding to user identification information existing in the image forming apparatus is used to store print data of a printing task in a particular document box of the image forming apparatus, wherein a user/document box mapping table in which users and document boxes are respectively matched to each other may be used as the mapping information. FIG. 7 is a diagram illustrating the user/document box mapping table 700 according to an example embodiment of the present general inventive concept. As illustrated in FIG. 7, the user/document box mapping table 700 may be generated by respectively matching user identification information USER 1, USER 2, and USER 3 and document boxes BOX A, BOX B, and BOX C. Although a user ID and a password are used as user identification information in the present embodiment, the present general inventive concept is not limited thereto, and any type of information may be used as long as the information is unique to a user, for example, an IP address of a host apparatus used by the user. Furthermore, although each of the document boxes, which are locations in the image forming apparatus to store print data, is named as "BOX," the present general inventive concept is not limited thereto, and the document boxes may be named differently. Based on a result of the determination in operation 335, if the user/document box mapping table exists in the image forming apparatus, the method proceeds to operation 345. If not, the method proceeds to operation 350.

In operation 340, a printing task is performed. The printing task is performed according to printing options set via the user interface 400 illustrated in FIG. 4. For example, "printing on both sides of a page" is performed if the option for "printing on both sides of a page" is set, and "N-up printing" is performed if the option for "N-up printing" is set.

In operation 345, print data is stored based on a user/document box mapping table. Here, it is possible that a user ID is matched to a document box in a user/document box mapping table 700 as illustrated in FIG. 7. Accordingly, print data of a printing task can be stored in the document box corresponding to the user, according to the user/document box mapping table. In other words, information regarding a document box to which print data is to be stored is extracted from the user/document box mapping table, and then the print data is stored in the corresponding document box. Referring to the exemplary user/document box mapping table 700 illustrated in FIG. 7, the user 1 is matched to the document box "BOX A," the user 2 is matched to the document box "BOX B," and the user 3 is matched to the document box "BOX C." Therefore, in case of the user 1, print data is stored in the document box "BOX A" corresponding to the user 1.

In the operation 350, print data is stored in a preset document box. According to an example embodiment of the present general inventive concept, the image forming apparatus may designate a particular document box as a default document box to store print data. Here, a particular document box designated as a default document box may be changed by a user, and a plurality of image forming apparatuses may have different default document boxes. For example, if an image forming apparatus designates the document box "BOX A" as a particular document box to which print data is stored, print data is stored in the document box "BOX A," which is a particular document box designated by the image forming apparatus, when there is no user/document box mapping table. Here, the document box "BOX A" is a common box. Furthermore, when there is no user/document box mapping table in an image forming apparatus, a user/document box mapping table may be generated. Here, the user/document box mapping table may be generated by linking a list of users and a list of document boxes via a local user interface unit of the image forming apparatus or a user interface unit of a host apparatus connected to the image forming apparatus. Furthermore, the storage of print data in operation 345 and operation 350 may be performed either before or after a printing task, and stored print data may be used by another printing task. In other words, one or more operations such as printing, copying, faxing, scanning, moving, external transmission (FTP, E-mail), editing, and deleting may be performed with respect to the stored print data in the image forming apparatus.

In operation 355, storage information of print data is displayed. Storage information of print data may be displayed on an image forming apparatus or a host apparatus connected to the image forming apparatus. When the print data is to be displayed on the image forming apparatus, storage information of print data may be displayed on a local user interface unit of the image forming apparatus. When the print data is to be displayed on the host apparatus connected to the image forming apparatus, storage information of print data may be displayed by a printer driver or a separate application of the host apparatus.

FIG. 10 is a diagram illustrating storage information when print data is stored in a document box "BOX A", according to an example embodiment of the present general inventive concept. For example, when print data is stored in the document box "BOX A" as illustrated in FIG. 10, storage information may not only include a name 1000 of the document box, but also may include at least one of a username 1100, the name 1200 of the print data, and printing options 1300 that are set with respect to the print data. Here, the printing options 1300 may be either entirely or partially displayed. Thus, a user may obtain storage information with respect to the print data stored in the document box "BOX A."

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few example embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A method of storing print data in an image forming apparatus that is connected to at least one host apparatus which generates the print data, the method comprising:
selecting storage of the print data;
receiving user identification information corresponding to the print data;
certifying the user identification information by using user identification information that is stored in the image forming apparatus in advance;
determining whether at least one document box corresponding to the user identification information exists in the image forming apparatus or not; and
storing the print data in the at least one document box.

2. The method of claim 1, wherein it is determined whether the at least one document box corresponding to the user identification information exists or not by using pre-stored mapping information, and
the user identification information and the at least one document box are matched in the mapping information.

3. The method of claim 1, wherein, if there is no document box corresponding to the user identification information, the print data is either stored in a preset common document box or printed on a printing medium; and
wherein a user may choose whether to store the print data in the common document box or not.

4. The method of claim 1, further comprising:
generating at least one document box corresponding to the user identification information; and
generating mapping information in which the at least one document box and the user identification information are matched.

5. The method of claim 4, wherein the at least one document box is generated by using either a local user interface of the image forming apparatus or a display unit of the at least one host apparatus.

6. The method of claim 4, wherein the generating of the mapping information includes setting at least one of a document box name which corresponds to a document box, the user identification information, and document box properties.

7. The method of claim 4, wherein the mapping information is a user/document box mapping table in which users and document boxes are respectively matched to each other.

8. The method of claim 1, further comprising:
selecting and post-processing the stored print data; and
displaying a result of storing the print data that is stored in the at least one document box.

9. An image forming apparatus comprising:
an interface unit to receive user identification information corresponding to print data;
a user certifying unit to certify the user identification information by using pre-stored user identification information;
a document box confirming unit to determine whether at least one document box corresponding to the user identification information exists or not; and
a storage unit which stores the print data in the at least one document box.

10. The image forming apparatus of claim 9, wherein the document box confirming unit uses pre-stored mapping information, in which the user identification information and the at least one document box are matched.

11. The image forming apparatus of claim 9, wherein, in case where no document box corresponding to the user identification information exists, the storage unit stores the print data in a preset common document box.

12. The image forming apparatus of claim 9, further comprising:
a document box generating unit to generate the at least one document box corresponding to the user identification information; and
a mapping information generating unit which generates mapping information in which the at least one document box and the user identification information are matched.

13. The image forming apparatus of claim 12, wherein the document box generating unit generates the at least one document box by using values input via a local user interface, and
wherein the mapping information generating unit sets at least one of a document box name which corresponds to a document box, the user identification information, and document box properties.

14. The image forming apparatus of claim 12, wherein the mapping information is a user/document box mapping table in which users and document boxes are respectively matched to each other.

15. The image forming apparatus of claim 9, further comprising
a data processing unit to convert the stored print data into files corresponding to the various functions of the image forming apparatus 140, such that the print data may be used to perform the various functions of the image forming apparatus;
at least one of an image forming unit to receive a file from the data processing unit and to print the file, a faxing unit to fax a file from the data processing unit, and a transmission performing unit to transmit a file from the data processing unit to the interface unit such that the file is transmitted to another external host apparatus or a server; and
a local user interface unit to display a result of storing the print data stored in the at least one document box.
